# EUROPEAN PATENT SPECIFICATION

(11) **EP 2 577 021 B1**
(45) Date of publication and mention of the grant of the patent: **02.09.2015**
(21) Application number: 11726929.0
(22) Date of filing: 23.05.2011
(51) Int. Cl.: F02B 77/04, F02B 33/44, F02M 31/04, F02M 65/00

(54) **ENGINE CLEANING METHOD**
MOTORREINIGUNGSVERFAHREN
PROCÉDÉ DE NETTOYAGE D'UN MOTEUR

(30) Priority: 24.05.2010 GB 201008577
(43) Date of publication of application: 10.04.2013
(73) Proprietor: Aquafuel Research Limited, Sittingbourne Kent ME9 8HL (GB)
(72) Inventor: MCNEIL, John, Tonbridge Kent TN27 0ED (GB)
(74) Representative: Dummett Copp LLP
(86) International application number: PCT/GB2011/050966
(87) International publication number: WO 2011/148164

(56) References cited:
- EP-A1- 2 103 798
- US-A- 4 191 537
- US-A1- 2005 217 613
- US-B1- 7 135 447

## Description

### Technical Field

This invention relates to a method of cleaning and decarbonising internal surfaces of a direct injection compression ignition engine

### Background Art

Compositions and methods have been devised that flush engines with cleaning fluid or other types of chemical solvent solutions in an attempt to clean these surfaces. In one such system, a separate canister containing a liquid mixture of engine fuel and injector cleaning solvent is connected to the fuel line, and the engine is operated using the fuel solvent mixture. Additionally, typical conventional solvent and detergent cleaning fluids are mixed with gasoline and the automobile engine is run during cleaning. When these cleaning fluids are successful in dislodging or removing carbon deposits they essentially only move the deposits downstream to the combustion chamber and/or exhaust system. Emissions during such a 'cleaning treatment process' are dramatically increased as the carbon and sludge moves further into the engine.

It is well known that reciprocating internal combustion engines tend to form carbonaceous deposits on the surface of engine components, such as, fuel injectors. It is believed that some of the unburnt hydrocarbons in the fuel undergoes complex cracking, polymerization and oxidation reactions, leading to reactive moieties which can interact with the fuel, recirculated gases and lubricating oils; thus forming insolubles. These deposits, even when present in relatively minor amounts, often cause noticeable operational performance issues such as loss of engine performance, increased fuel consumption and increased production of exhaust pollutants. It also results in deformation of injector spray patterns, poor atomization, fuel impingement on the cylinder liner and lubricating oil contamination.

Previously, in order to remove such deposits, mechanics would have to either use chemicals which would only superficially and temporarily clean the engine (U.S. Pat. No. 4,787,348) or run cleaner through the rail and fuel injectors by disabling the electric fuel pump, a process which is time consuming.

Other methods require aerosol spraying devices (U.S. Pat. No 7,135,447).

### Disclosure of Invention

### Technical Problem

Internal combustion engines tend to form carbonaceous deposits on the surface of engine components, such as, fuel injectors. It is believed that some of the unburnt hydrocarbons in the fuel undergoes complex cracking, polymerization and oxidation reactions, leading to reactive moieties which can interact with the fuel, recirculated gases and lubricating oils; thus forming insolubles. These deposits, even when present in relatively minor amounts, often cause noticeable operational performance issues such as loss of engine performance, increased fuel consumption and increased production of exhaust pollutants. It also results in deformation of injector spray patterns, poor atomization, fuel impingement on the cylinder liner and lubricating oil contamination.

### Technical Solution

We have surprisingly found that switching a heterogeneous charge compression ignition engine for a short period to McNeil Cycle ® and running it on polyol or a mixture of polyols removes carbon deposits from injection equipment and internal surfaces of the engine. As the polyols the following compounds and their blends could be used: glycerine, ethylene glycol, propylene glycol.

### Advantageous Effects

The carbon deposites are removed without the need to switch off and diassemble the engine, emissions are kept low, engine wear is low, and engine life time is increased.

### Description of Drawings

Right hand cylinder bank measurement of Doosan V12 engine running on tallow at 375 KWe /85% of full continuous power rating.

### Best Mode

To instigate an injector cleaning cycle (INCIP 'injector nozzle clean in place') the following procedure initiated:
The engine is switched into the 'McNeil Cycle' according to the UK patent GB2460996 which raises the inlet air temperature to the required limit ∼60-200 °C. This can be accomplished on most production turbocharged engines by momentarily bypassing the charge air cooler and using the inherent waste heat produced by the turbocharger to increase inlet air temperature.

Once the required inlet air temperature is reached the running fuel can be switched from 'normal' to cleaning polyol.

The engine can then be operated at the same load for a set period, 1-30 minutes, on the cleaning polyol.

Once the designated time limit has been reached, the running fuel can be switched from cleaning polyol to 'normal'.

The engine is then returned to diesel cycle. The inlet air temperature will then be reduced to normal limits, for example by deactivating the charge air cooler bypass.

The engine can then be operated in normal diesel cycle for a given period. The period between INCIP applications is determined by gradually rising exhaust temperatures and increasing CO levels. The actual INCIP time in each particular case will depend on the specific injector nozzle, and fuel properties.

Example. Doosan V12 engine operating on animal tallow at 350 KWe with a 6 hour interval and 2.5 min INCIP cycle period during which glycerine was injected instead of an operational fuel. Reduction in exhaust temperatures are displayed. CO levels in the exhaust reduce from ∼ 400 ppm to ∼ 200 ppm. The interval timing is determined by the rate of exhaust temperature and CO rise which directly corresponds to the level of injector nozzle deposits. Failure to clean on a regular basis will result in irreversible engine damage.

### Mode for Invention

While the invention has, for the purposes of illustration, been described with reference to a specific example it will be understood that the invention is not limited to this example. Various alterations, modifications and/or additions may be introduced into the constructions and arrangements described above without departing from the ambit of the presnt invention set forth in the claims. The actual INCIP time will depend on the specific injector nozzle, and fuel properties.

### Industrial Applicability

The invention is applicable to the combination of a wide variety of fuels.Such fuels include hydrocarbon fuels, for example heavy and residual fuels, and renewable vegetable- or animal-based fuels or by-products, for example tall oils or animal fats. The invention is suitable for application in internal combustion engines such as power generating engines, marine engines, aircraft engines, automotive engines and engines of other land vehicles. The articles 'a' and 'an' are used herein to mean 'at least one' unless the context requires otherwise.

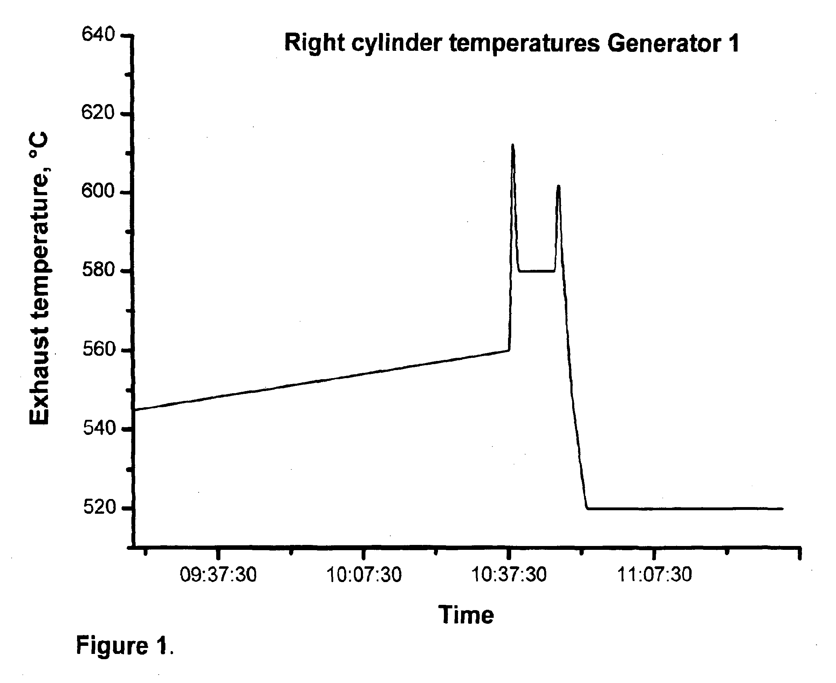

## Claims

1. A method of cleaning a reciprocal direct injection compression ignition engine from carbonaceous deposits formed in the course of its operation comprising switching engine to a McNeil cycle combustion mode by increasing the inlet air temperature to 60 - 200 °C ; switching from normal operational fuel to a polyol or a blend of polyols, running engine on a polyol till the CO level in the exhaust gas flue and exhaust temperature return to normal levels, switching fuel supply back to normal operational fuel and combustion mode to standard.

2. A method according to claim 1, where polyol is propane-1,2,3-triol.

## Patentansprüche

1. Verfahren zum Reinigen eines Dieselmotors mit Direkteinspritzung von kohlenstoffhaltigen Ablagerungen, die während seines Betriebes gebildet werden, umfassend:
Umschalten des Motors in einen Verbrennungsmodus mit McNeil-Zyklus durch Erhöhen der Einlasslufttemperatur auf 60 bis 200°C;
Umschalten von einem Normalbetriebskraftstoff auf ein Polyol oder eine Mischung aus Polyolen,
Betreiben des Motors mit einem Polyol bis die CO-Konzentration im Abgasstrom und die Abgastemperatur auf Normalniveaus zurückkehren,
Umschalten der Kraftstoffzufuhr zurück auf Normalbetriebskraftstoff und des Verbrennungsmodus auf Standardbetrieb.

2. Verfahren nach Anspruch 1, wobei das Polyol ein Propan-1,2,3-Triol ist.

## Revendications

1. Procédé de nettoyage d'un moteur à allumage par compression, à injection directe et à mouvement alternatif par élimination des dépôts carbonés formés au cours de son fonctionnement, comprenant le passage du moteur à un mode de combustion à cycle de McNeil en augmentant la température de l'air d'admission à une valeur de 60 °C à 200 °C ; le fait de passer d'un carburant opérationnel normal à un polyol ou à un mélange de polyols, le fait de faire tourner le moteur avec un polyol jusqu'à ce que le niveau de CO dans le gaz d'échappement et que la température de l'échappement retournent à des niveaux normaux, le fait de revenir à une alimentation en carburant opérationnel normal et à un mode de combustion standard.

2. Procédé selon la revendication 1, dans lequel le polyol est le propane-1,2,3-triol.
